# EUROPEAN PATENT SPECIFICATION

(11) **EP 4 471 492 B1**
(45) Date of publication and mention of the grant of the patent: **11.11.2026**
(21) Application number: 24152769.6
(22) Date of filing: 19.01.2024
(51) Int. Cl.: G02F 1/13, G01M 3/26

(54) **SEALING DEVICE**
DICHTUNGSVORRICHTUNG
DISPOSITIF D'ÉTANCHÉITÉ

(30) Priority: 31.05.2023 TW 112205482 U
(43) Date of publication of application: 04.12.2024
(73) Proprietor: Data Image Corporation, New Taipei City 221 (TW)
(72) Inventor: CHEN, Ching-Wen, 221 New Taipei City (TW); WANG, Hsien-Kuan, 221 New Taipei City (TW); CHUANG, Hao-Yu, 221 New Taipei City (TW)
(74) Representative: dompatent

(56) References cited:
- CN-A- 115 494 338
- CN-B- 113 390 572
- CN-U- 207 832 401

## Description

### TECHNICAL FIELD

The present invention relates in general to a sealing device and more particularly to a sealing device for a display device.

### BACKGROUND

The vacuum leak test is to detect whether an air leakage happens in a to-be-tested product. Generally speaking, when a to-be-tested product is arranged in a conventional jig for the vacuum leak test, a sealing component of the jig is usually in contact with a front surface of the to-be-tested product. If the front surface of the to-be-tested product is a display surface of a monitor, the sealing component may block a to-be-tested passage of the product, thereby being impossible to fully confirm the air leakage condition about the product. Alternatively, if the front surface of the to-be-tested product is the display surface of the monitor, the sealing component may cause pressure damage on the display surface of the monitor.

CN 115 494 338 A discloses a detection method, which is used for electrostatic protection detection of terminal equipment and is characterized in that,
The terminal device includes a housing and a display panel, the housing includes a bottom wall and a side wall disposed at an edge of the bottom wall, a gap is formed between the edge of the display panel and the side wall, and there is a sealing body in the gap;
The detection method includes: performing airtightness detection on the terminal device to be detected, so as to obtain a first parameter value of the terminal device to be detected; wherein, the first parameter value is used in the terminal device to represent the parameter value of the tightness of the gap;
According to the first parameter value of the terminal device to be detected, determine the electrostatic protection capability of the medium in the gap in the terminal device to be detected; wherein, the medium includes the sealing body, or the medium Including air and the sealing body.

Accordingly, those skilled in the art are dedicated to achieve how to prevent negative situations about the vacuum leak test.

### SUMMARY

The present invention is reflected in the independent claims. Preferred embodiments are reflected in the dependent claims

In view of the situations of the prior art, a new sealing device is provided in the present disclosure, and this sealing device is used for preventing a front surface of a to-be-tested product from being contacted during the vacuum leak test.
According to an aspect of the present invention, a sealing device for performing a vacuum leak test on a display device, wherein the display device includes a display surface and an outer periphery surface, and wherein the sealing device comprises:
a base, having an inner side surface and an inner bottom surface; and
a sealing ring component, disposed in the base along the inner side surface; and
at least one limiting component, and the at least one limiting component is disposed on the sealing ring component such that the sealing ring component is positioned between the at least one limiting component and the base;
wherein the sealing ring component is propped against the outer periphery surface without being in contact with the display surface when the display device is arranged on the base, and thenthereby forming a to-be-evacuated space (R) is formed between the display surface and the inner bottom surface is provided.

The disclosure of the present invention will become apparent from the following detailed description of the preferred but non-limiting embodiments. The following description is made with reference to the accompanying drawings.

### BRIEF DESCRIPTION OF THE DRAWINGS

FIG. 1 illustrates a side sectional view of a sealing device and a display device that the sealing device is applicable to according to an embodiment of the present disclosure.
FIG. 2 illustrates a partial enlarged drawing of the sealing device and the display device that the sealing device is applicable to of FIG. 1.
FIG. 3 illustrates a side sectional view of arranging a display device on a sealing device according to an embodiment of the present disclosure.
FIG. 4 illustrates a partial enlarged drawing of the sealing device and the display device that the sealing device is applicable to of FIG. 3.
FIG. 5 illustrates a schematic diagram in a top view of a sealing device according to an embodiment of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

The embodiments of the present disclosure will be described more fully hereinafter with accompanying drawings. In addition to the detailed descriptions, the present invention can also be widely implemented in other embodiments. A true scope of the disclosure is indicated by the following claims.

In description of the specification, many specific details are provided in order to enable readers to have a more complete understanding of the present invention. However, the present invention may still be implemented under some or all of these specific details being omitted. In addition, well-known step or element is not described in detail to avoid unnecessary limitation of the present invention. The same or similar elements in the drawings have the same or similar reference signs. It should be noted that the drawings are for only schematic purpose and do not represent actual size or quantity of components, unless otherwise specified.

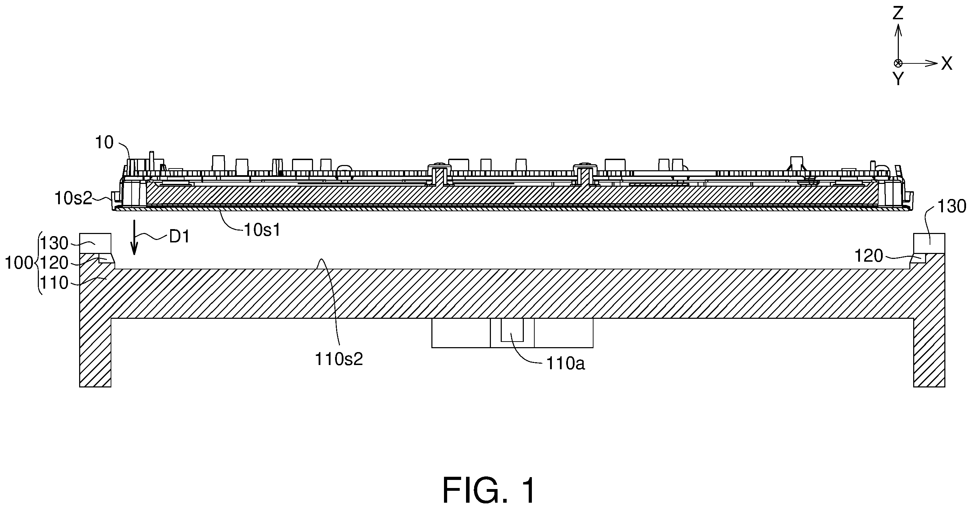

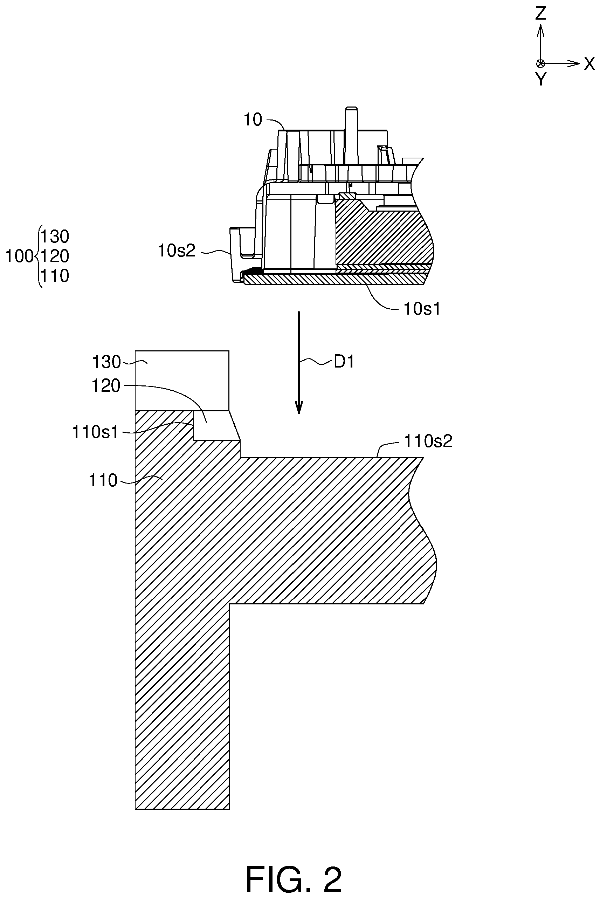

Please refer to FIG. 1 to FIG. 2, FIG. 1 illustrates a side sectional view of a sealing device 100 and a display device 10 that the sealing device 100 is applicable to according to an embodiment of the present disclosure, and FIG. 2 illustrates a partial enlarged drawing of the sealing device 100 and the display device 10 that the sealing device 100 is applicable to.

For example, the sealing device 100 according to an embodiment of the present disclosure is a sealing device applicable to the display device 10. The display device 10 is a display product such as a display of desktop computer, a display of tablet computer, or a navigation or aviation display. The sealing device 100 may be configured to form a to-be-evacuated space between the sealing device 100 and the display device 10, and then the to-be-evacuated space can be evacuated to a vacuum. As shown in FIG. 1 and FIG. 2, when a vacuum leak test is to be performed on the display device 10, the display device 10 can be installed on the sealing device 100 in the direction indicated by an arrow D1.

The display device 10 includes a display surface 10s1 and an outer periphery surface 10s2. The sealing device 100 comprises a base 110 and a sealing ring component 120. The base 110 has an inner side surface 110s1 and an inner bottom surface 110s2. For example, the sealing ring component 120 is a component for sealing, formed of a curing liquid adhesive material (such as a RTV curing liquid), a silicone material or a foaming material. The sealing ring component 120 is disposed in the base 110 along the inner side 110s1 of the base 110. In addition, the sealing device 100 further comprises at least one limiting component 130. For example, the limiting component 130 is a component for fixing, formed of a metal material or a plastic material. The limiting component 130 is disposed on the sealing ring component 120 such that the sealing ring component 120 is positioned between the limiting component 130 and the base 110. The limiting component 130 may be configured to hold the sealing ring component 120 on the base 110 to prevent the sealing ring component 120 from separated from the base 110.

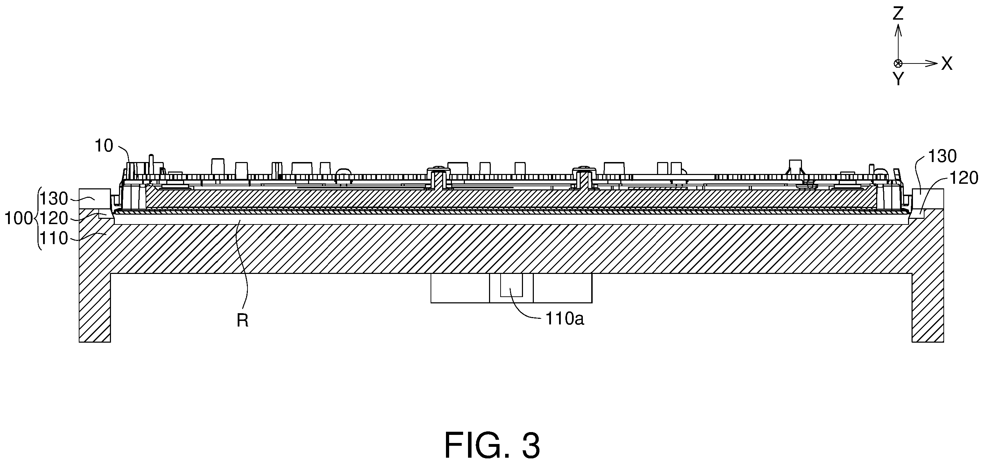

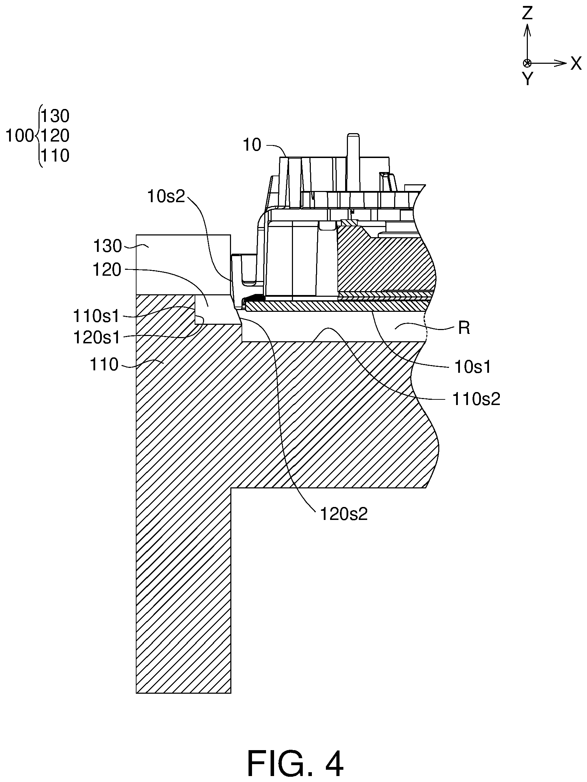

Please refer to FIG. 3 and FIG. 4, FIG. 3 illustrates a side sectional view of arranging the display device 10 on the sealing device 100, and FIG. 4 illustrates a partial enlarged drawing of the sealing device 100 and the display device 10 arranged thereon.

When the display device 10 is arranged on the base 110, the sealing ring component 120 is propped against the outer periphery surface 10s2 of the display device 10 without in contact with the display surface 10s1 of the display device 10, and then a to-be-evacuated space R is formed between the display surface 10s1 of the display device 10 and the inner bottom surface 110s2 of the base 110. The base 110 may have an air channel 110a. The air channel 110a may penetrate the inner bottom surface 110s2. That is, after the to-be-evacuated space R is formed between the display device 10 and the base 110, an air extraction device (not shown) can be connected to the air channel 110a to evacuate the to-be-evacuated space R to a vacuum, thereby performing a vacuum leak test of the display device 10.

As shown in FIG. 4, in a sectional view, a cross section of the sealing ring component 120 has a first edge 120s1 and a second edge 120s2 opposite to each other. A portion of the sealing ring component 120 corresponding to the first edge 120s1 is in contact with the inner side surface 110s1 of the base 110, and the outer periphery surface 10s2 of the display device 10 is propped against a portion of the sealing ring component 120 corresponding to the second edge 120s2. There is an interference fit between the outer periphery surface 10s2 of the display device 10 and the second edge 120s2 of the sealing ring component 120. The sealing ring component 120 may be slightly deformed due to an external force from the contact with the display device 10. Therefore, when the display device 10 is arranged on the base 110, an airtight contact is formed between the display device 10 and the second edge 120s2 of the sealing ring component 120 such that the air in the to-be-evacuated space R will not leak from the position where the sealing ring component 120 is in contact with the display device 10. Further, as shown in FIG. 4, when the display device 10 is arranged on the base 110, the outer periphery surface 10s2 of the display device 10 may be in contact with the limiting component 130. The contact between the outer periphery surface 10s2 and the limiting component 130 is for making the display device 10 more stably fixed on the sealing device 100, but this contact is not limited to be an airtight contact.

In the present embodiment, the first edge 120s1 and the second edge 120s2 are not parallel. Further, in the present embodiment, the two opposite edges of the sealing ring component 120 that are adjacent to the first edge 120s1 and the second edge 120s2 may be parallel. That is, the cross-section of the sealing ring component 120 in the present embodiment may be a trapezoidal shape. However, the present invention is not limited thereto. In other embodiments, the cross-section of the sealing ring component 120 may also be a rectangular (such as square or non-square rectangle) shape, a circular shape or other shapes. That is, the sealing ring component 120 may also be a rectangle-shaped ring or a circle-shaped ring.

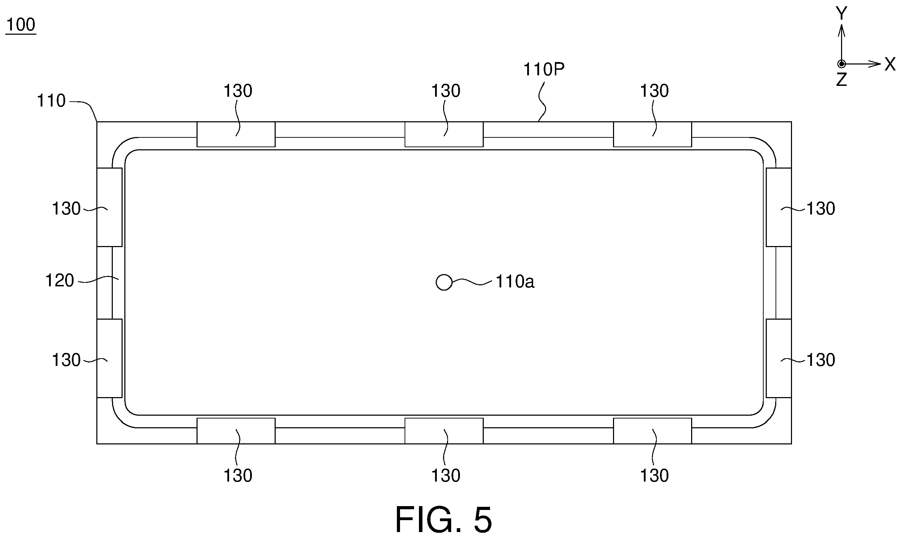

Please refer to FIG. 5, FIG. 5 illustrates a schematic diagram in a top view of the sealing device 100.

As shown in FIG. 5, in the present embodiment, the quantity of the at least one limiting component 130 is plural, and a plurality of limiting components 130 are spaced apart on the sealing ring component 120 along a periphery 110p of the base 110 (also the four edges of the base 110) such that the entire ring of the sealing ring component 120 can be uniformly limited and held. In addition, in a top view, the limiting component 130 and the sealing ring component 120 overlap at least partially with each other. However, the present invention is not limited to this. In other embodiments, the limiting component 130 is not limited to be a plurality of independent components spaced apart, but can be a single annular component that is formed integrally formed (namely formed in one piece), disposed on the sealing ring component 120, and at least partially overlapping with the sealing ring component 120 in a top view.

In conclusion, the sealing device 100 described in embodiments of the present disclosure can achieve that the sealing ring component will not be in contact with the display surface of the display device when a to-be-tested product as a display device is arranged on the base of the sealing device by the design of the sealing ring component with an improved cross-sectional shape. Therefore, the present invention can prevent a to-be-tested air channel from being blocked and avoid a pressure damage of a display surface of a display.

While the disclosure of the present invention has been described and illustrated with reference to specific embodiments thereof, these descriptions and illustrations do not limit the present invention. It should be understood by those skilled in the art that various changes may be made without departing from the scope of the present invention as defined by the appended claims.

## Claims

1. A sealing device (100) for performing a vacuum leak test on a display device (10), wherein the display device (10) includes a display surface (10s1) and an outer periphery surface (10s2), and wherein the sealing device (100) comprises:
a base (110), having an inner side surface (110s1) and an inner bottom surface (110s2);
a sealing ring component (120), disposed in the base (110) along the inner side surface (110s1); and
at least one limiting component (130), and the at least one limiting component (130) is disposed on the sealing ring component (120) such that the sealing ring component (120) is positioned between the at least one limiting component (130) and the base (110);
wherein the sealing ring component (120) is propped against the outer periphery surface (10s2) without being in contact with the display surface (10s1) when the display device (10) is arranged on the base (110), thereby forming a to-be-evacuated space (R) between the display surface (10s1) and the inner bottom surface (110s2).

2. The sealing device according to claim 1, wherein in a sectional view, a cross section of the sealing ring component (120) has a first edge (120s1) and a second edge (120s2) opposite to each other, and the first edge (120s1) and the second edge (120s2) are not parallel.

3. The sealing device according to claim 2, wherein a portion of the sealing ring component (120) corresponding to the first edge (120s1) is in contact with the inner side surface (110s1) of the base (110).

4. The sealing device according to claim 2, wherein the outer periphery surface (10s2) is propped against a portion of the sealing ring component (120) corresponding to the second edge (120s2) when the display device (10) is arranged on the base (110).

5. The sealing device according to claim 3, wherein the outer periphery surface (10s2) is propped against a portion of the sealing ring component (120) corresponding to the second edge (120s2) when the display device (10) is arranged on the base (110).

6. The sealing device according to claim 1, wherein the base (110) has an air channel (110a), and the air channel (110a) penetrates the inner bottom surface (110s2).

7. The sealing device according to claim 1, wherein in a top view, the at least one limiting component (130) and the sealing ring component (120) overlap at least partially with each other.

8. The sealing device according to claim 1, wherein the quantity of the at least one limiting component (130) is plural, and a plurality of limiting components (130) are spaced apart on the sealing ring component (120) along a periphery (110p) of the base (110).

9. The sealing device according to claim 7, wherein the quantity of the at least one limiting component (130) is plural, and a plurality of limiting components (130) are spaced apart on the sealing ring component (120) along a periphery (110p) of the base (110).

10. The sealing device according to claim 1, wherein the sealing ring component (120) is a rectangle-shaped ring or a circle-shaped ring.

11. The sealing device according to claim 1, wherein the sealing ring component (120) is formed of a curing liquid adhesive material, a silicone material or a foaming material.

## Patentansprüche

1. Dichtungsvorrichtung (100) zur Durchführung einer Vakuum-Dichtheitsprüfung an einer Anzeigevorrichtung (10), wobei die Anzeigevorrichtung (10) eine Anzeigefläche (10s1) und eine äußere Randfläche (10s2) umfasst und wobei die Dichtungsvorrichtung (100) Folgendes umfasst:
eine Basis (110), die eine innere Seitenfläche (110s1) und eine innere Bodenfläche (110s2) aufweist;
eine Dichtungsringkomponente (120), die sich entlang der inneren Seitenfläche (110s1) in der Basis (110) befindet; und
wenigstens eine limitierende Komponente (130), wobei die wenigstens eine limitierende Komponente (130) so auf der Dichtungsringkomponente (120) angeordnet ist, dass sich die Dichtungsringkomponente (120) zwischen der wenigstens einen limitierenden Komponente (130) und der Basis (110) befindet;
wobei die Dichtungsringkomponente (120) an der äußeren Randfläche (10s2) abgestützt ist, ohne mit der Anzeigefläche (10s1) in Kontakt zu sein, wenn die Anzeigevorrichtung (10) auf der Basis (110) angeordnet ist, wodurch zwischen der Anzeigefläche (10s1) und der inneren Bodenfläche (110s2) ein zu evakuierender Raum (R) entsteht.

2. Dichtungsvorrichtung gemäß Anspruch 1, wobei in einer Querschnittsansicht ein Querschnitt der Dichtungsringkomponente (120) eine erste Kante (120s1) und eine zweite Kante (120s2), die einander gegenüberliegen, aufweist und die erste Kante (120s1) und die zweite Kante (120s2) nicht parallel zueinander sind.

3. Dichtungsvorrichtung gemäß Anspruch 2, wobei sich ein Teil der Dichtungsringkomponente (120), der der ersten Kante (120s1) entspricht, in Kontakt mit der inneren Seitenfläche (110s1) der Basis (110) befindet.

4. Dichtungsvorrichtung gemäß Anspruch 2, wobei die äußere Randfläche (10s2) an einem Teil der Dichtungsringkomponente (120), der der zweiten Kante (120s2) entspricht, abgestützt ist, wenn die Anzeigevorrichtung (10) auf der Basis (110) angeordnet ist.

5. Dichtungsvorrichtung gemäß Anspruch 3, wobei die äußere Randfläche (10s2) an einem Teil der Dichtungsringkomponente (120), der der zweiten Kante (120s2) entspricht, abgestützt ist, wenn die Anzeigevorrichtung (10) auf der Basis (110) angeordnet ist.

6. Dichtungsvorrichtung gemäß Anspruch 1, wobei die Basis (110) einen Luftkanal (110a) aufweist und der Luftkanal (110a) die innere Bodenfläche (110s2) durchdringt.

7. Dichtungsvorrichtung gemäß Anspruch 1, wobei in einer Draufsicht die wenigstens eine limitierende Komponente (130) und die Dichtungsringkomponente (120) wenigstens teilweise miteinander überlappen.

8. Dichtungsvorrichtung gemäß Anspruch 1, wobei die wenigstens eine limitierende Komponente (130) mehrfach vorhanden ist und eine Mehrzahl von limitierenden Komponenten (130) auf der Dichtungsringkomponente (120) entlang eines Randes (110p) der Basis (110) voneinander beabstandet sind.

9. Dichtungsvorrichtung gemäß Anspruch 7, wobei die wenigstens eine limitierende Komponente (130) mehrfach vorhanden ist und eine Mehrzahl von limitierenden Komponenten (130) auf der Dichtungsringkomponente (120) entlang eines Randes (110p) der Basis (110) voneinander beabstandet sind.

10. Dichtungsvorrichtung gemäß Anspruch 1, wobei die Dichtungsringkomponente (120) ein rechteckiger Ring oder ein kreisförmiger Ring ist.

11. Dichtungsvorrichtung gemäß Anspruch 1, wobei die Dichtungsringkomponente (120) aus einem härtbaren flüssigen Klebstoffmaterial, einem Silikonmaterial oder einem aufschäumbaren Material besteht.

## Revendications

1. Dispositif d'étanchéité (100) pour effectuer un essai d'étanchéité au vide sur un dispositif d'affichage (10), dans lequel ledit dispositif d'affichage (10) comprend une surface d'affichage (10s1) et une surface périphérique extérieure (10s2), et dans lequel ledit dispositif d'étanchéité (100) comprend :
une base (110) ayant une surface latérale intérieure (110s1) et une surface de fond intérieure (110s2) ;
un composant de bague d'étanchéité (120) situé dans la base (110) le long de la surface latérale intérieure (110s1) ; et
au moins un composant limitant (130), où ledit au moins un composant limitant (130) est situé sur le composant de bague d'étanchéité (120) de manière que ledit composant de bague d'étanchéité (120) soit situé entre ledit au moins un composant limitant (130) et la base (110) ;
dans lequel le composant de bague d'étanchéité (120) est appuyé contre la surface périphérique extérieure (10s2) sans être en contact avec la surface d'affichage (10s1) lorsque le dispositif d'affichage (10) est disposé sur la base (110), formant ainsi un espace à mettre sous vide (R) entre la surface d'affichage (10s1) et la surface de fond intérieure (110s2).

2. Dispositif d'étanchéité selon la revendication 1, dans lequel, dans une vue en coupe, une section transversale du composant de bague d'étanchéité (120) présente une première arête (120s1) et une deuxième arête (120s2) opposées l'une à l'autre, et la première arête (120s1) et la deuxième arête (120s2) ne sont pas parallèles.

3. Dispositif d'étanchéité selon la revendication 2, dans lequel une partie du composant de bague d'étanchéité (120) qui correspond à la première arête (120s1) est en contact avec la surface latérale intérieure (110s1) de la base (110).

4. Dispositif d'étanchéité selon la revendication 2, dans lequel la surface périphérique extérieure (10s2) est appuyée contre une partie du composant de bague d'étanchéité (120) qui correspond à la deuxième arête (120s2) lorsque le dispositif d'affichage (10) est disposé sur la base (110).

5. Dispositif d'étanchéité selon la revendication 3, dans lequel la surface périphérique extérieure (10s2) est appuyée contre une partie du composant de bague d'étanchéité (120) qui correspond à la deuxième arête (120s2) lorsque le dispositif d'affichage (10) est disposé sur la base (110).

6. Dispositif d'étanchéité selon la revendication 1, dans lequel la base (110) présente un canal d'air (110a), et le canal d'air (110a) traverse la surface de fond intérieure (110s2).

7. Dispositif d'étanchéité selon la revendication 1, dans lequel, en vue de dessus, ledit au moins un composant limitant (130) et le composant de bague d'étanchéité (120) se chevauchent au moins partiellement.

8. Dispositif d'étanchéité selon la revendication 1, dans lequel le nombre de composants limitants (130) est supérieur à un, et une pluralité de composants limitants (130) sont espacés les uns des autres sur le composant de bague d'étanchéité (120) le long d'une périphérie (110p) de la base (110).

9. Dispositif d'étanchéité selon la revendication 7, dans lequel le nombre de composants limitants (130) est supérieur à un, et une pluralité de composants limitants (130) sont espacés les uns des autres sur le composant de bague d'étanchéité (120) le long d'une périphérie (110p) de la base (110).

10. Dispositif d'étanchéité selon la revendication 1, dans lequel le composant de bague d'étanchéité (120) est une bague de forme rectangulaire ou une bague de forme circulaire.

11. Dispositif d'étanchéité selon la revendication 1, dans lequel le composant de bague d'étanchéité (120) est constitué d'un matériau adhésif liquide durcissable, d'un matériau silicone ou d'un matériau moussant.
